Europäisches Patentamt

(19) European Patent Office

Office européen des brevets

(11) Publication number: **0 040 659**
**B1**

(12) **EUROPEAN PATENT SPECIFICATION**

(45) Date of publication of patent specification: **12.09.84**

(21) Application number: **80301767.2**

(22) Date of filing: **28.05.80**

(51) Int. Cl.³: **C 22 B 7/02, C 22 B 3/00, B 03 C 1/28**

(54) **Heavy metal recovery in ferrous metal production processes.**

(43) Date of publication of application:
**02.12.81 Bulletin 81/48**

(45) Publication of the grant of the patent:
**12.09.84 Bulletin 84/37**

(84) Designated Contracting States:
**BE DE FR IT SE**

(56) References cited:
**DE-A-1 583 774**
**DE-A-2 305 645**
**DE-B-2 454 332**
**DE-C- 128 534**
**DE-C- 246 865**
**FR-A-2 404 468**
**GB-A-1 568 362**
**US-A-1 609 882**
**US-A-1 719 056**
**US-A-2 351 795**

(73) Proprietor: **NATIONAL RESEARCH DEVELOPMENT CORPORATION**
**101 Newington Causeway**
**London SE1 6BU (GB)** .

(72) Inventor: **Pooley, Frederick David**
**49 Elgar Crescent**
**Cardiff (GB)**
Inventor: **Mallowan, John Michael**
**28 Windermere Avenue**
**Cardiff (GB)**
Inventor: **Wheatley, Barry Ivan**
**C.U.I.C. University College P.O. Box 78**
**Cardiff (GB)**
Inventor: **Gurr, William Roger**
**17 Ibstock Close**
**Reading, Berkshire (GB)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a process for the production of ferrous metals or alloys thereof, in which iron-bearing flue dust, containing Zn and optionally other heavy metals, is generated in a furnace. Iron-containing dusts produced by blast furnaces, arc furnaces and steel-making plant contain zinc and lead and vary in composition depending on the nature of the charge used and the proportion of scrap and upon the degree to which the zinc and lead levels have been allowed to build up in the furnace. Such dusts generally have a particle size of 95%—5 microns, or finer.

According to current blast furnace practice, blast furnace dusts are in the first instance recycled through the blast furnace; zinc levels tend however to build up in the dust, and these high levels of zinc cause corrosion of the furnace linings. Therefore, after a certain period of operation those dusts which contain excessively high zinc levels cannot be recycled further without damage and they are disposed of by dumping, which causes environmental pollution.

In oxygen steel making processes, dusts also arise and these are not generally recycled, but are merely dumped; the zinc level in the dumped dust also represents and environmental pollution hazard, and depends on the quality of the scrap used.

Similarly, arc furnace flue dusts vary in composition depending on the furnace charge. Zinc levels in arc furnace flue dusts are in general higher than those of blast furnace dusts, and similar problems arise in dumping of dusts.

The dust which has been dumped may be treated to recover the heavy metal values, either for commercial utilisation or to remove them as an environmental hazard.

Known methods for extracting these heavy metals=include pyrometallurgical techniques and acid extraction. The disadvantages of pyrometallurgical techniques are the high capital expenditure on plant, the high running costs due to energy consumption and the air pollution resulting from the process. Acid extraction techniques have the disadvantage that acids which cannot economically be regenerated are consumed, and that waste materials which involve disposal costs are produced. In addition, both pyrometallurgical processes and acid extractions have the disadvantage that only limited ranges of materials can be mixed and processed at one time.

Previous attempts have been made to use an alkaline extracting process for the extraction of heavy metals but these attempts have not resulted in a sufficiently high extraction efficiency, and have not been pursued. Such previous attempts utilised a very concentrated alkaline extraction which was not sufficiently selective and did not provide an economically viable percentage extraction.

An object of the present invention is therefore to provide a process for the extraction of Zn and optionally other heavy metals from materials containing them which provides sufficiently high extraction efficiency, involves relatively low capital and operating expenditure and permits a range of materials to be mixed and processed at one time. It is also an object of the invention to provide a cyclic process for the extraction of heavy metals by alkaline extraction in which the components can be recovered and reused.

In the process according to the invention, the ability of alkali metal hydroxides, in particular sodium hydroxide to dissolve heavy metals and their compounds, in particular where the metals are zinc and lead to form, for example, sodium zincate and sodium plumbate in solution, is utilised to give an extraction process of high efficiency and selectivity.

According to this invention a process for the production of ferrous metal or alloys thereof in which iron bearing flue dust containing zinc and optionally other heavy metals is generated in a furnace, and including an extraction stage which comprises the steps of: separating the iron-bearing dust from the furnace flue gases leaching the dust in an alkali metal hydroxide solution having a concentration greater than 5M, and a pulp density of 1:1.5 to 1:8 preferably 1:3 to 1:8, at a temperature in the range 80°C to the boiling point of the solution, to dissolve Zn and other heavy metals present; separating the pregnant alkali metal hydroxide solution from the residue; washing the residue to remove the alkali metal hydroxyde and returning the iron dust residue to the furnace; purifying and clarifying the pregnant alkali metal hydroxide solution; recovering the Zn and other heavy metals present to regenerate the alkali metal hydroxide solution; and recycling the alkali metal hydroxide solution for re-use in the leaching step. The pulp density is a measure of the solid content of the pulp and expressed either as a ratio (by weight) of the solid to liquid content or as a percentage of the total weight of pulp.

For optimum operating conditions, the alkali metal hydroxide concentration is 8 to 16M and preferably 10 to 14M.

The boiling point of the alkali metal hydroxide solution depends on the concentration, and with hydroxide concentrations at the higher end of the preferred range, the boiling point may be as high as 140°C. The operating temperature may be increased by working under pressure. Operating at high temperature is preferred, because the extraction tends to be more selective at higher temperatures, the rate of reaction is increased and the viscosity of hydroxide solution is reduced, making the materials easier to handle. Filtration of the pregnant alkali metal hydroxide solution is preferably effected at temperature in excess of 60°C.

The precise conditions required to give optimum results depend on the material being treated. Where impurities other than zinc are present in the pregnant alkali metal hydroxide solution, purification may be initiated before the non-ferrous metal is recovered. A preferred purification technique is by cementation with metallic zinc preferably in the form of dust.

Suitable techniques for heavy metal recovery from the sodium hydroxide solution include electrowinning; precipitation in the form of the carbonate with carbon dioxide or carbonic acid or precipitation in the form of the sulphide with hydrogen sulphide or sulphide ions.

In a preferred embodiment of the process according to the invention, the flue dust is a basic oxygen steel-making (BOS) dust, a blast furnace dust or an arc furnace dust.

In many large scale iron and steelmaking operations the hot off gases are subjected to both wet and dry cleaning processes and the dust feedstock to a recovery plant will include dust from both sources.

In the process according to this invention, magnetic materials may be removed from the feedstock by magnetic separation, prior to leaching and preferably, in a magnetic field having an intensity of up to 12000 Gauss. The feedstock is generally in the form of slurries having solids contents typically in the range 0.1 to 25% by weight. Since the dewatering of these slurries is essential before processing, the incorporation of magnetic separation into the system offers several processing advantages.

The arisings from an integrated steelworks can consist of dusts and slurries from blast furnaces, basic oxygen steelmaking, electric arc furnaces, cast house dusts, mill scale and other arisings. The total arisings can be over 100,000 tpa (ton/annum), of which the most highly contaminated proportion from the arc furnaces, is of the order of 10%. In this type of feedstock the zinc and lead level is typically 1—3%, the soluble proportion of which has to be removed to be suitable for ground disposal of recycling.

The requirement for the recovery plant is to prevent the pollution that ground disposal of unprocessed material would create by recycling the best available iron oxide to the steel plant, and remove leachable non-ferrous materials to produce an environmentally acceptable inert waste for dumping of non-recycled material.

Since the quantities of solid available in the slurry form predominate, direct processing would lead to the introduction into the leaching operation of unacceptable quantities of water, even after filtration. Alternatively a drying operation would be required. The former would be expensive in terms of the chemical losses necessitated in maintaining a water balance and the latter in terms of energy and extra capital involved.

The introduction of magnetic separation will allow the recovery of the bulk of the feedstock, typically (50—75%), which will contain up to 90% of the iron in the solids. The smaller portion containing the low susceptibility non-ferrous material can then be leached for the recovery of these values. This whole process is carried out under essential neutral (pH7) slurry conditions, at or close to ambient temperature. Filtration is therefore facilitated and the rates are higher than those for leach liquor filtration.

The solid arisings from iron and steelmaking and ancillary processes are composed of three main groups of chemical compounds, these are: iron oxides, ferritic materials, and iron containing silicaceous materials e.g. refractories. In addition, there are the oxides of certain base metals such as zinc and lead, and steel alloying and impurity elements, manganese, vanadium phosphorus etc.

Each of these materials has a different magnetic susceptibility as a physical property, and individual particles will have differing susceptibilities depending on any iron content that they may have. It is therefore possible that by the successive application of various levels of magnetic intensity, a segregation in magnetic terms, which in practice means iron content, can be effected. With a final high intensity stage all solid particles can be removed from the slurry. We therefore propose to separate the pregnant alkali metal hydroxide solution from the residue by at least one high intensity magnetic separation stage.

Embodiments of the invention will now be further described with reference to the following examples and with reference to the accompanying drawings, of which:

Figures 1 to 3 are graphs showing the extraction obtained under various conditions in example I;

Figures 4 to 6 are graphs showing the extraction under various conditions, in example II;

Figure 7 is a flow diagram of an extraction stage;

Figure 8 is a flow diagram of a steel production process including an extraction stage such as illustrated in Figure 7;

Figure 9 is a flow diagram of a dust recovery process in which the feedstock slurry is subjected to two stages of magnetic separation prior to leaching;

Figure 10 is a graph of the proportion of dust in Grade % against magnetic susceptibility (i.e. the inverse of field strength in K gauss, showing the variations in magnetic susceptibility with origin of the dust; and

Figure 11 is a flow diagram of an iron dust recovery process.

Example 1
A BOS dust of the following weight composition was obtained from British Steel Corporation:

| FeO | 85% | Mn | 1.65% |
| $Fe_2O_3$ | 0.4% | S | 0.14% |
| $SiO_2$ | 3.5% | P | 0.25% |
| CaO | 5.7% | Zn | 2.5% |
| MgO | 0.9% | Pb | 0.25% |
| $Al_2O_3$ | 0.5% | Cu | 0.01% |

The material was a fine dark magnetic powder of specific gravity of 4.4, and was pyrophoric, confirming X-ray powder photographs indicating the iron to be present as FeO. The material was extremely fine, 73% being less than 45 micron.

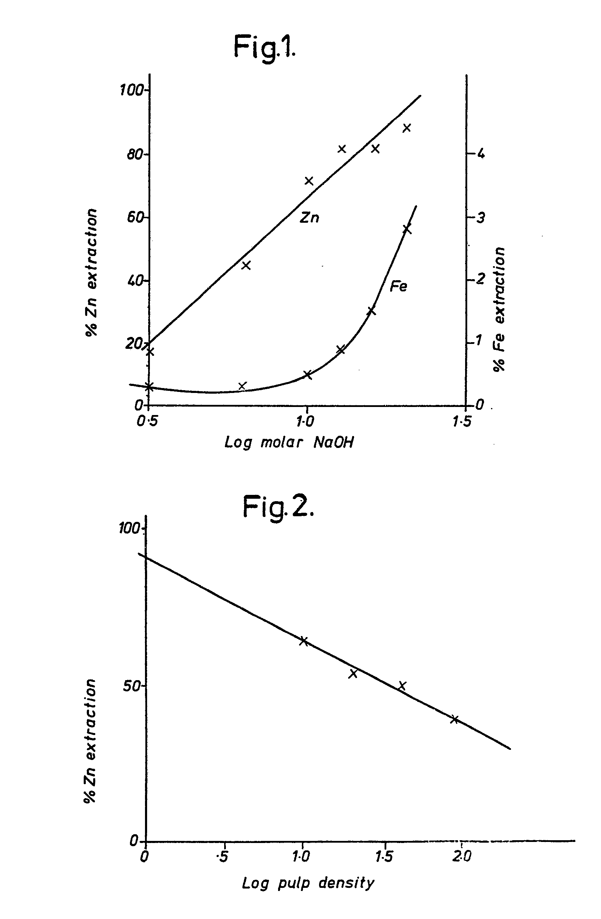

Figure 1 shows the % zinc and % iron extraction versus log molar sodium hydroxide concentration, at a temperature of 120°C and a pulp density of 40%.

Figure 2 shows the % zinc extraction versus log pulp density, expressed in g/litre, at a temperature of 90°C and a sodium hydroxide concentration of 10M.

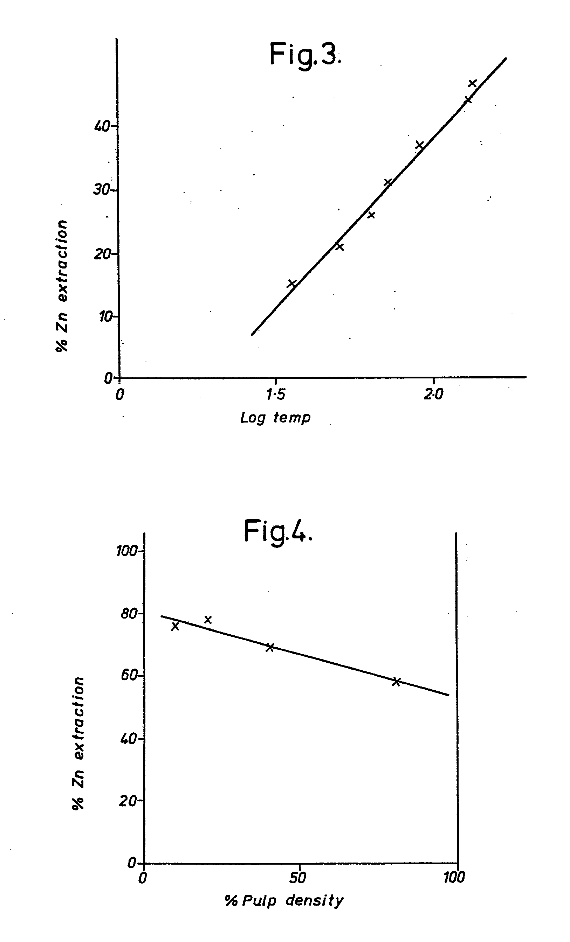

Figure 3 shows the % zinc extraction versus temperature, at a pulp density of 40% and a sodium hydroxide concentration of 10M.

From this data, it was decided that a sodium hydroxide solution concentration of 10M (Log molar $conc^n$=1.0) at a temperature of about 120°C (Log Temp=2) would result in satisfactory zinc extraction, resulting in an extraction per step of about 70% at a pulp density of 40%; the efficiency of a three-step extraction would therefore be 75%.

The percentages of zinc and iron were determined by analysis, using atomic absorption spectrophotometry.

Example 2
An arc furnace flue dust having the following composition was investigated. Because the furnace was charged with low grade scrap, the sample has a high zinc content.

| Fe | 20% | Ca | 4.3% |
| Zn | 28.0% | Cd | 0.24% |
| Cu | 0.26% | Si | 4% |
| Pb | 2.5% | | |

The dust was a fine light brown material formed under oxidising conditions indicating the presence of well oxidised products, such as ZnO and $Fe_2O_3$.

Figure 4 shows the % zinc extraction versus % pulp density, at a temperature of 90°C and a sodium hydroxide solution concentration of 10M.

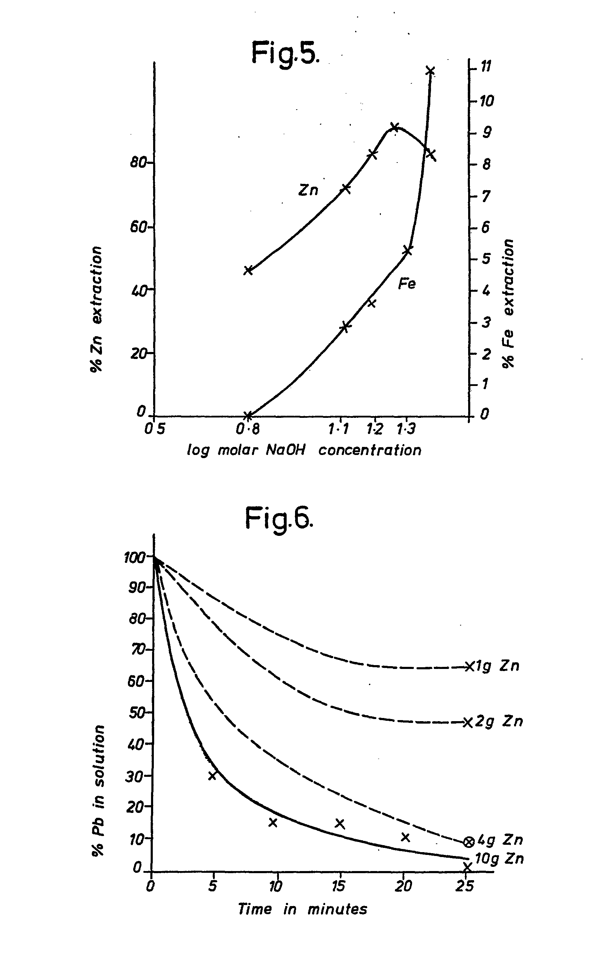

Figure 5 shows the % zinc and % iron extraction versus log molar sodium hydroxide concentration at boiling temperature of the caustic soda solution and 20% pulp density.

The liquor was purified by concentration with zinc dust at a temperature of 49°C and the results of this are shown in Figure 6. Where 10 g Zn/litre of solution is used, the solution contains 1% of the original lead concentration after 25 minutes cementation.

The purified, zinc-rich solution is then extracted using an electrowinning process. The results of this electrowinning, using a magnesium cathode and a nickel or nickel plate anode at a spacing of 1.5 cms, are as follows:

| g/l | Current % Efficiency | Current Density (milli-amp/sq cm) |
| --- | --- | --- |
| | 36 | 36.5 |
| 4.1—7.7 | 67 | 36.5 |
| 7.7—13 | 58 | 73.0 |
| 13—20 | 78 | 73.0 |
| 20—29 | 98 | 73.0 |
| 29—32.7 | 96 | 73.0 |

On a commerical scale, the probable power requirement, assuming varying cell efficiencies and current densities would be of the order of 3000 KWh/ton zinc won, neglecting power losses due to power equipment.

In a practical design, to recover 0.44 tons zinc per hour, nine cells of dimensions 1.25m×1.25m×3m using 3×3 cathodes per cell and 40 anodes, will be required.

The residual dust, which was about half the weight of the original, had a zinc level of the order of 8 to 10% zinc, and an iron content of about 40%. About 80% of the original zinc was recovered.

The residual dust could be further purified by roasting with sodium carbonate at a temperature of preferably above 700°C, more preferably above 760°C. At higher temperatures, roasting times are reduced but energy requirements are higher.

Roasting of the caustic leach residues at 860°C for 50 minutes, followed by caustic leaching of the roasted product gave zinc extractions in excess of 90% of the residual values.

The product obtained therefore had a negligible zinc level, of less than 1%.

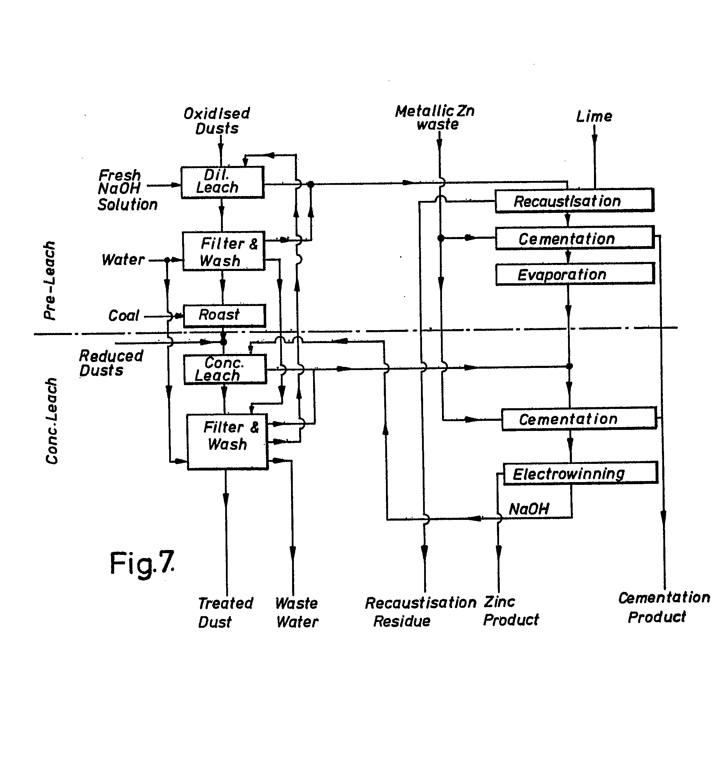

The extraction stage illustrated in Figure 7 includes an additional pre-leach step which is recommended for the removal of lead from oxidised dusts such as produced by arc furnaces. Dividing the figure is a dot-dash line above which are those steps associated with the optional dilute pre-leach. Optimum lead removal is achieved at an alkali metal hydroxide, in this case NaOH, concentration of 1 to 2M the leach being effected at, say, 52°C for half an hour, depending upon the particle size of the dust. Following filtration the residue is washed in water and roasted in a reducing atmosphere produced for example by roasting with coal or other carbonaceous material at from 800° to 1100°C, the reduced dust then being passed to the main, concentrated leach such as described in Examples 1 and 2, possibly after mixing with fresh blast furnace dust.

Pregnant alkali metal hydroxide solution is passed from the pre-leach, for re-caustisation with lime and subsequently, the extraction of Pb with some Zn, by cementation with metallic Zn. A cementation product of approximately 80% Pb, 20% Zn will be obtained. The purified alkali metal hydroxide solution is then concentrated by evaporation and combined with the pregnant solution from the concentrated leach for further cementation with metallic zinc. After cementation, Zn is extracted by electrowinning and the purified concentrated alkali metal hydroxide solution recycled to the concentrated leach.

The metallic zinc required for the cementation steps may be added in the form of any waste material containing metallic zinc, the process thereby affording the further facility of reclaiming Zn from waste material such as metal finishing waste.

The process according to the present invention preferably is carried out on a single site, that is to say, the zinc recovery plant is linked with the ferrous metal production plant in which the flue dusts are generated. For economic reasons, however, it may be necessary to build a zinc recovery plant at some central location accessible to a number of plants supplying iron-bearing flue dusts, the treated dust being recycled to one or all of the supply plants.

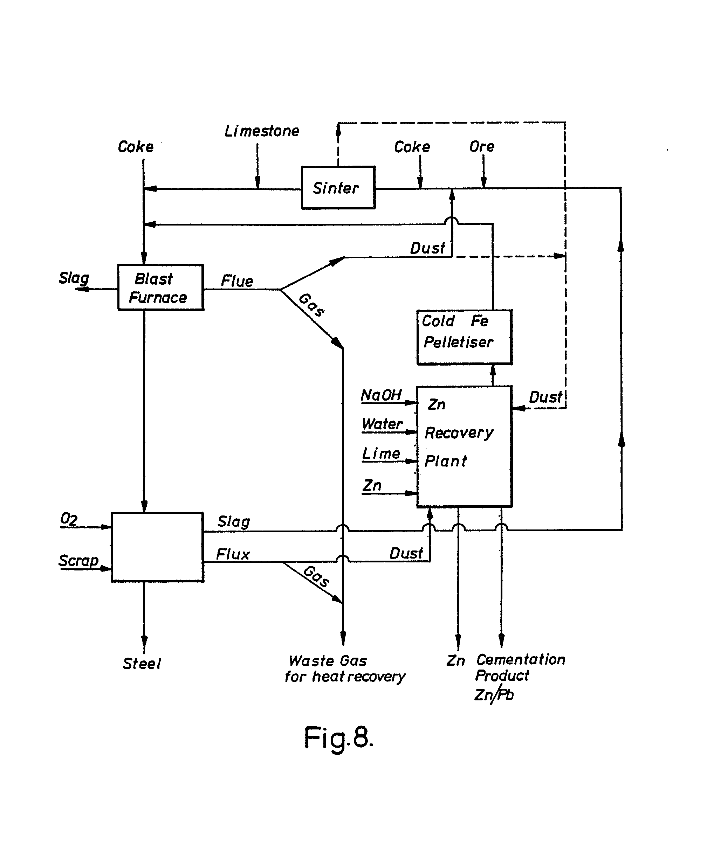

Figure 8 is a flow diagram of a steel production process incorporating an extraction stage such as illustrated in Figure 7. Blast furnace and converter dusts are separated from the flue gases, from which useful heat can be recovered, and fed to the zinc recovery plant, possibly via the blast furnace charge sintering furnace. A pelletising machine is provided to form the treated iron dust into pellets which are then recycled to the blast furnace.

The process described above not only avoids cleaning costs and the problem of disposal of the dust and hence pollution but, in addition, produces saleable by-products and enables the utilisation of otherwise wasted iron.

With regard to the removal of magnetic materials from the feedstock, prior to leaching, by magnetic separation reference is made to the arising from one particular steelworks. The arising was made up of:

|                           | tpa    |
|---------------------------|--------|
| blast furnace dust        | 60000  |
| blast furnace slurry      | 50000  |
| basic oxygen plant slurry | 50000  |
| electric steelmaking slurry | 7000 |
| Total                     | 167000 |

The mean analysis of this arising as proposed for recovery purposes was:

|                 | %     |
|-----------------|-------|
| Fe (total)      | 44.68 |
| CaO             | 5.61  |
| $SiO_2$         | 4.78  |
| $Al_2O_3$       | 1.38  |
| MgO             | 1.01  |
| MnO             | 0.99  |
| ZnO             | 0.84  |
| PbO             | 0.29  |
| $Na_2O$         | 0.23  |
| $K_2O$          | 0.24  |

When processed in successive 2000 and 8000 gauss fields a recycle stream of approximately 11900 tpa of the two magnetic underflows combined was found to contain 71.5% of the total feed and included 87.5% of the iron content.

The analysis was:

|                 | %     |
|-----------------|-------|
| Fe (total)      | 54.66 |
| CaO             | 4.37  |
| $SiO_2$         | 5.05  |
| $Al_2O_3$       | 1.29  |
| MgO             | 1.06  |
| MnO             | 1.06  |
| ZnO             | 0.17  |
| PbO             | 0.11  |
| $Na_2O$         | 0.22  |
| $K_2O$          | 0.19  |

This reduces the leach circuit throughput from over 20 tph to less than 6 tph.

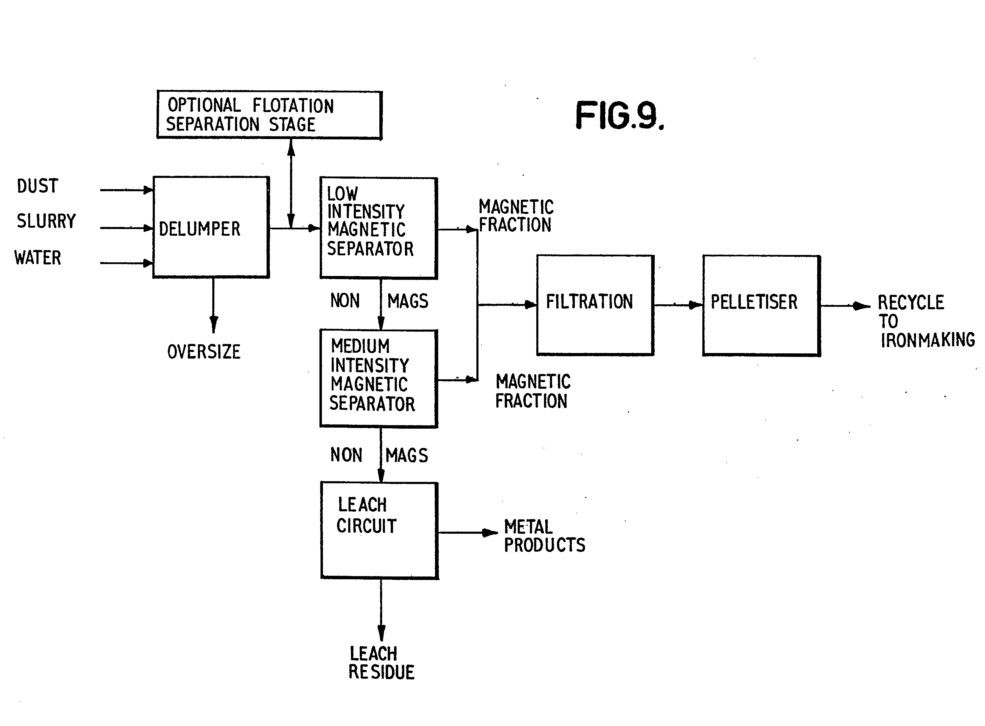

The flow process shown in Figure 9 is most suited for dusts such as electric arc furnace dust having a low carbon content. For blast furnace dust having a much higher (in the region of 20%) carbon content the feedstock slurry is preferably mixed with a frothing agent and subject to a preliminary floatation separation prior to magnetic separation, the separated carbon conveniently being dried and compacted into fuel brickettes.

An important advantage of this technique is that it enables a significant reduction (by the order of 75%) in the size and capital cost of the process plant required for the dust recovery process, as compared with what otherwise would be necessary. Further the dewatering filtration stage is facilitated, rates are improved, less equipment (i.e. small filtration area) is required than for the recovery of the same weight of solids from leach liquor. Also less expensive construction materials may be used since the operating conditions are less arduous.

The bulk of the iron contained in the feedstock can be recycled in an upgraded form and this fraction contains the essentially unleachable non-ferrous material in the feed. The leachable non-ferrous materials, from BOS and electric are processing, is upgraded for recovery purposes.

Although a chemically pure substance has its own specific magnetic susceptibility, in practical terms each mineral species will exhibit a range of susceptibilities depending on; its origin; any processing to which it has been subjected; the feed to the processing operation; and other variables. Hence the separation effected at a given intensity will not be absolutely specific and in practice at least two stages of treatment will be required.

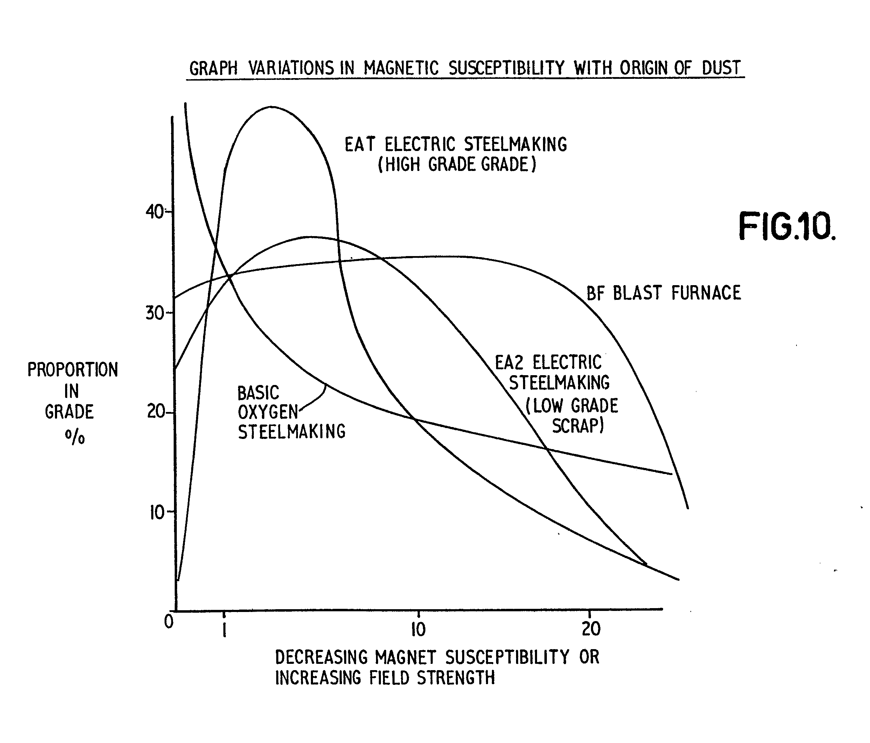

The iron dust feedstocks contain a completed spectrum of magnetic susceptibilities with differing distributions. This is illustrated in Figure 10. Typically for an arc furnace dust, a medium intensity (8—12000 gauss) separator is required to remove the more highly susceptible fractions, these including the magnetite $(Fe_3O_4)$ wustite (FeO) and ferritic materials (containing zinc lead and alkali metals). This allows the high intensity unit (18—28000 gauss) remove the remaining low susceptibility solids without any possibility of blockages from the bulk of the material.

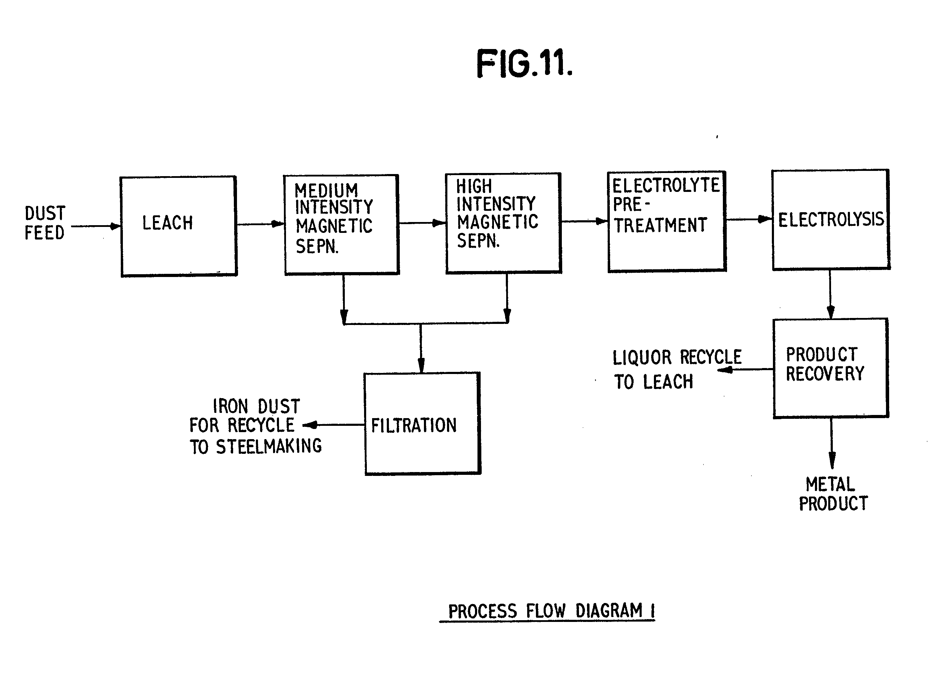

Since the soluble proportion of the feedstock varies from typically, 2% for blast furnace dusts to over 20% for arc furnace dusts, the medium intensity separator will remove 75—95% of the insoluble solids and the remaining insoluble low susceptibility material, 3—25% will be recovered by the high intensity unit. The solids free solution can then be treated to recover the non-ferrous metals dissolved, by the process illustrated in Figure 11. All magnetic separation can be effected at ambient temperature.

The level of intensity for the medium intensity separator depends on the specificity of feedstock to the plant and any requirement for recycling the iron ore. For example, when processing the arisings from an arc furnace the feedstock of which is low quality scrap material e.g. No. 4 and No. 5 qualities, an 8—10000 gauss field will remove 30—60% of the high to medium magnetic material, with the remaining low magnetic susceptibility material being removed in the highest intensity field at over 20000 gauss. Alternatively, a blast furnace arising may require a low intensity (2—4000 gauss) preliminary separation in addition to or in place of a medium intensity stage. This would separate the 20—45% of most highly magnetic material in the first stage and a corresponding proportion of less magnetic solids in the second stage; the residual low susceptibility solids will be recovered at high intensity. Generally the choice of intensities for mixed feeds would be decided upon after consideration of the proportions and characteristics of the feedstock.

The choice of equipment depends on the number of stages required. In a preferred embodiment the first stage is a rotating drum concentrator using permanent magnets. A high intensity electromagnetic separator is used for the third and possible also for the second stage. The separator has different packing materials in the magnetic zone depending on the quantity and susceptibility of solids intended to pass through that stage. The packing in the final stage generally comprises a stainless steel wool.

The recovery of pregnant liquor entrained in the solids is effected by washing with water. This is carried out by repulping the sludge product in the case of the drum concentrator, followed by filtration of the dilute lixiviant slurry, or by direct washing on the high intensity machines. In the latter case the solids are washed at the periphery of the magnetic field, removed by water jets outside the magnetic field and recovered from the aqueous slurry by filtration. Filtration occurs under these conditions at significantly improved rates as compared with those possible for removing the solids from the leach slurry. The overall washing efficiency depends on the choice of filtration equipment and this is determined by the intended use of the end product. Lixiviant recoveries of over 98% are possible.

Typically, a liquor feed of 350 gpl NaOH containing 125 gpl iron oxides can produce solids with 30% by weight of water and less than 5% by weight of NaOH with a clear liquor overflow.

In the selection of conventional solid/liquid separation techniques the physical and chemical characteristics of the constituents have to be evaluated.

Paramount among these are the particle size range and density, the liquid viscosity and the total flowrate of material. With high viscosity lixiviants e.g. caustic soda, high temperatures are required to improve filtration and these lead to increased corrosive effects and a more mechanically severe environment for the separation medium. This calls for the use of expensive alloy materials. The high temperatures required for filtration (of the order of 100°C) result in a short filter cloth life expectancy (4—8 weeks).

The average particle sizes of steel plant dusts are typically less than 100 micron, with art furnace dusts typically over 90% less than 100 microns. This factor, in combination with a high viscosity liquor and the relatively small driving force obtainable with the low differential pressures, of the order -of 10:1, in conventional equipment, gives very poor filtration rates. These being typically 20—25 kg/m²hr compared with 1500—2000 kg/m²hr for the removal of gypsum from process liquors.

Because the separation force exerted upon the particles in magnetic separation is not physically generated the separation is effectively independent of particle size, liquor viscosity and temperature. There is no directly applicable rate parameter available for purposes of comparison as there is no filtration medium and separation occurs as a bulk flow of solids. The size of the magnetic separators required is related only to the volumetric liquor flowrate. The capital cost being approximately half of the filter route.

One advantage of the use of magnetic separators is that it enables a high rate of recovery of iron bearing materials from viscous process liquors at ambient temperatures, the preferred application being steel plant wastes from alkaline leach systems e.g. caustic soda. Also the equipment has a lower capital cost than conventional filtration equipment one reason being that the reduced level of corrosive attack at ambient temperatures allows the use of less expensive materials, and is physically smaller, reducing the space required. Further by proper selection of magnetic intensity the major proportion of iron bearing material can be recycled to an iron making process. At present this material is ground dumped and is an environmental pollutant. Another advantage is that recycled material can be upgraded with respect to iron content, to a value equivalent to that of imported iron ores. Because no filter medium is required maintenance costs are significantly reduced and consumption is much reduced because high recoveries of lixiviant are possible.

## Claims

1. A process for the production of ferrous metals or alloys thereof in which iron-bearing flue dust containing Zn and optionally other heavy metals is generated in a furnace, and including an extraction stage which comprises the steps of: separating the iron-bearing dust from the furnace flue gases; leaching the dust in an alkali metal hydroxide solution having a concentration greater than 5M, and a pulp density of 1:1.5 to 1:8 at a temperature in the range 80°C to the boiling point of the solution, to dissolve Zn and other heavy metals present; separating the pregnant alkali metal hydroxide solution from the residue; washing the residue to remove the alkali metal hydroxide and returning the iron dust residue to the furnace; purifying and clarifying the pregnant alkali metal hydroxide solution; recovering the Zn and other heavy metals present to regenerate the alkali metal hydroxide solution, and recycling the alkali metal hydroxide solution for re-use in the leaching step.

2. A process according to claim 1 wherein the concentration of the alkali metal hydroxide solution in the main leaching step is from 8 to 16M.

3. A process according to claim 2 wherein the said concentration is from 10 to 14M.

4. A process according to any one of claims 1 to 3, wherein purification and clarification of the pregnant alkali metal hydroxide solution is effected by cementation with metallic Zn.

5. A process according to any one of claims 1 to 4, wherein before returning the iron dust residue to the furnace, the residue is roasted with sodium carbonate at a temperature above 700°C, and again leached in a caustic solution.

6. A process according to any one of claims 1 to 5, comprising pre-leaching the dust in a dilute alkali metal hydroxide solution.

7. A process according to claim 6 and comprising separating the pregnant alkali metal hydroxide solution produced by pre-leaching from the residue, and reducing the residue by roasting prior to the main leaching step.

8. A process according to claim 7 wherein the residue is roasted in a reducing atmosphere.

9. A process according to claim 7 or claim 8 wherein the residue is roasted with carbonaceous material at from 800° to 1100°C.

10. A process according to any one of claims 1 to 9 in which recovery of the Zn and/or other heavy metals to regenerate the solution, is by electrowinning.

11. A process according to any one of claims 1 to 10, wherein the iron dust residue is formed into pellets before being returned to the furnace.

12. A process according to any one of claims 1 to 11, in which separation of the pregnant alkali metal hydroxide solution from the residue is at least partly effected by filtration at a temperature in excess of 60°C.

13. A process according to any one of claims 1 to 12, wherein magnetic materials are removed from the feedstock by magnetic separation prior to leaching.

14. A process according to claim 13 wherein the feedstock is in the form of a slurry having a solids content of between 0.1 to 25% by weight.

15. A process according to claim 13 or claim 14 wherein magnetic separation is effected under essentially neutral slurry conditions at or near ambient temperature.

16. A process according to any one of claims 13 to 15 wherein the feedstock slurry is mixed with a frothing agent and subject to a preliminary floatation separation prior to magnetic separation.

17. A process according to any one of claims 13 to 16 wherein the magnetic materials are removed by two stages of magnetic separation.

18. A process according to claim 17 wherein separation is effected by passing the slurry through magnetic fields respectively having an intensity of 2000 and 8000 Gauss.

19. A process according to any one of claims 1 to 18 wherein the step of separating the pregnant alkali metal hydroxide solution from the residue comprises at least one high intensity magnetic separation stage.

20. A process according to claim 19 wherein the said high intensity magnetic separation stage is effected in an electromagnetic separator.

21. A process according to claim 19 or claim 20 wherein the said high intensity separation stage is preceded by a preliminary magnetic separation stage at lower intensity.

22. A process according to claim 21 wherein the preliminary separation stage is effected in a rotating drum concentrator using permanent magnets.

23. A process according to claim 21 or claim 22 wherein the said lower intensity is less than 12000 Gauss.

**Revendications**

1. Procédé de production de métaux ferreux ou d'alliages de ces métaux, dans lequel la poussière mètallique porteuse de fer, contenant du zinc et éventuellement d'autres métaux lourds, est produite dans un four, et comportant un étage d'extraction, caractérisé en ce qu'il comprend les différentes étapes consistant à: séparer la poussière porteuse de fer des gaz de combustion; à laver les poussière dans une solution d'hydroxyde de métal alcalin présentant une concentration supérieure à 5 M et une densité de boue de l'ordre de 1/1,5 à 1/8 à une température comprise entre 80°C et le point d'ébullition de la solution, de manière à dissoudre le zinc et autres métaux lourds présents; séparer de résidu la solution d'hydroxyde de métal alcalin utile: laver le résidu pour éliminer l'hydroxyde de métal alcalin et ramener le résidu de poussière de fer dans le four; purifier et clarifier la solution d'hydroxyde de métal alcalin utile; récupérer le zinc et autres métaux lourds présents, pour régénérer la solution d'hydroxyde de métal alcalin, et recycler la solution d'hydroxyde de métal alcalin pour la réutiliser dans l'étape de lessivage.

2. Procédé selon la revendication 1, caractérisé en ce que la concentration de la solution d'hydroxyde de métal alcalin de l'étape de lessivage principale est comprise entre 8 et 16 M.

3. Procédé selon la revendication 2, caractérisé en ce que la concentration est comprise entre 10 et 14 M.

4. Procédé selon l'une quelconque des revendications 1 à 3, caractérisé en ce que la purification et la clarification de la solution d'hydroxyde de métal alcalin se font par cémentation en présence de zinc métallique.

5. Procédé selon l'une quelconque des revendications 1 à 4, caractérisé en ce qu'avant de ramener le résidu de poussière de fer dans le four, on calcine ce résidu avec du carbonate de sodium à une température supérieure à 700°C, et on le lessive de nouveau dans une solution caustique.

6. Procédé selon l'une quelconque des revendications 1 à 5, caractérisé en ce qu'il comporte un pré-lessivage de la poussière dans une solution diluée d'hydroxyde de métal alcalin.

7. Procédé selon la revendication 6, caractérisé en ce qu'il comprend l'étape consistant à séparer de résidu la solution d'hydroxyde de métal alcalin utile produite par pré-lessivage, et à réduire le résidu par calcination avant l'étape de lessivage principale.

8. Procédé selon la revendication 7, caractérisé en ce que le résidu est calciné en atmosphère réductrice.

9. Procédé selon l'une quelconque des revendications 7 et 8, caractérisé en ce que le résidu est calciné avec un matériau carboné à une température comprise enter 800° et 1.100°C.

10. Procédé selon l'une quelconque des revendications 1 à 9, caractérisé en ce que la récupération du zinc et/ou d'autres métaux lourds, pour régénérer la solution, se fait par électro-extraction.

11. Procédé selon l'une quelconque des revendications 1 à 10, caractérisé en ce que le résidu de poussière de fer est formé en boulettes avant d'être ramené au four.

12. Procédé selon l'une quelconque des revendications 1 à 11, caractérisé en ce que la séparation de la solution d'hydroxyde de métal alcalin utile, par rapport au residu, s'obtient au moins partiellement par filtrage à une température dépassant 60°C.

13. Procédé selon l'une quelconque des revendications 1 à 12, caractérisé en ce que les matériaux magnétiques sont extraits de la matière première d'alimentation, par séparation magnétique avant lessivage.

14. Procédé selon la revendication 13, caractérisé en ce que la matière première d'alimentation se présente sous la forme d'une boue dont la teneur en matières solides est comprise entre 0,1 et 25% en poids.

15. Procédé selon l'une quelconque des revendications 13 et 14, caractérisé en ce que la séparation magnétique est faite dans les conditions d'une boue essentiellement neutre, à la température ambiante ou au voisinage de celle-ci.

16. Procédé selon l'une quelconque des revendications 13 à 15, caractérisé en ce que la boue de matière première d'alimentation est mélangée à un agent moussant et soumise à une séparation préliminaire par flottaison avant la séparation magnétique.

17. Procédé selon l'une quelconque des revendications 13 à 16, caractérisé en ce que les matériaux magnétiques sont extraits par deux étages de séparation magnétique.

18. Procédé selon la revendication 17, caractérisé en ce que la séparation est effectuée en faisant passer la boue dans des champs magnétiques présentant des intensités respectives de 2000 et 8000 Gauss.

19. Procédé selon l'une quelconque des revendications 1 à 18, caractérisé en ce que l'étape de séparation entre la solution d'hydroxyde de métal alcalin et le résidu, comporte au moins un étage de séparation magnétique à forte intensité.

20. Procédé selon la revendication 19, caractérisé en ce que l'étape de séparation magnétique à forte intensité est effectuée dans un séparateur électro-magnétique.

21. Procédé selon l'une quelconque des revendications 19 et 20, caractérisé en ce que l'étape de séparation à forte intensité est précédée par une étape de séparation magnétique préliminaire à intensité plus faible.

22. Procédé selon la revendication 21, caractérisé en ce que l'étape de séparation préliminaire est faite dans un concentrateur à tambour tournant utilisant des aimants permanents.

23. Procédé selon l'une quelconque des revendications 21 et 22, caractérisé en ce que l'intensité plus faible est inférieure à 12.000 Gauss.

**Patentansprüche**

1. Verfahren zur Herstellung von Eisenmetallen oder Legierungen davon, wobei eisenhaltiger Staub in Gichtgasen bzw. Schornsteinabgasen, der Zink und gegebenenfalls andere Schwermetalle enthält, in einem Ofen erzeugt wird, wobei das Verfahren eine Extraktionsstufe einschließt, dadurch gekennzeichnet, daß man den eisenhaltigen Staub aus den Abgasen abtrennt, den Staub in einer Alkalihydroxydlösung mit einer Konzentration von mehr als 5M und einer Suspensionsdichte von von 1:1,5 bis 1:8 bei einer Temperatur im Bereich von 80°C bis zum Siedepunkt der Lösung zur Auflösung von Zink und anderen Vorhendenen Schwermetallen auslaugt, die angereicherte Alkalihydroxydlösung vom Rückstand abtrennt, den Rückstand zur Entfernung des Alkalihydroxyds wäscht und den Eisenstaubrückstand zum Ofen zurückführt, die angereicherte Alkalihydroxydlösung reinigt und klärt, das Zink und andere vorhandene Schwermetalle zur Regenerierung der Alkalihydroxydlösung gewinnt und die Alkalihydroxydlösung zur Wiederverwendung un der Auslaugstaffe im Kreiflauf zurückführt.

2. Verfahren nach Anspruch 1, dadurch gekennzeichnet, daß die Konzentration der Alkalihydroxydlösung in der Hauptauslaugstufe 8 bis 16 M beträgt.

3. Verfahren nach Anspruch 2, dadurch gekennzeichnet, daß die Konzentration 10 bis 14M beträgt.

4. Verfahren nach einem der Ansprüche 1 bis 3, dadurch gekennzeichnet, daß die Reinigung und Klärung der angereicherten Alkalihydroxydlösung durch Zementierung mit metallischem Zink bewirkt wird.

5. Verfahren nach einem der Ansprüche 1 bis 4, dadurch gekennzeichnet, daß vor Rückführung des Eisenstaubrückstandes zum Ofen der Rückstand mit Natriumcarbonat bei einer Temperatur über 700°C geröstet und wieder in einer Hydroxydlösung ausgelaugt wird.

6. Verfahren nach einem der Ansprüche 1 bis 5, dadurch gekennzeichnet, daß der Staub in einer verdünnten Alkalihydroxydlösung vorgelaugt wird.

7. Verfahren nach Anspruch 6, dadurch gekennziechnet, daß die durch das Vorlaugen entstandene angereicherte Alkalihydroxydlösung vom Rückstand abgetrennt und der Rückstand durch Rösten vor der Hauptauslaugstufe reduziert wird.

8. Verfahren nach Anspruch 7, dadurch gekennzeichnet, daß der Rückstand in einer reduzierenden Atmosphäre geröstet wird.

9. Verfahren nach Anspruch 7 oder 8, dadurch gekennzeichnet, daß der Rückstand mit kohlenstoffhaltigem Material bei 800° bis 1100°C geröstet wird.

10. Verfahren nach einem der Ansprüche 1 bis 9, dadurch gekennzeichnet, daß die Rückgewinnung von Zink und/oder anderen Schwermetallen zur Regenerierung der Lösung durch Electrogewinnung erfolgt.

11. Verfahren nach einem der Ansprüche 1 bis 10, dadurch gekennzeichnet, daß der Eisenstaubrückstand vor der Rückführung zum Ofen zu Pellets geformt wird.

12. Verfahren nach einem der Ansprüche 1 bis 11, dadurch gekennzeichnet, daß die Abtrennung der angereicherten Alkalihydroxydlösung vom Rückstand wenigstens teilweise durch Filtrieren bei einer Temperatur über 60°C bewirkt wird.

13. Verfahren nach einem der Ansprüche 1 bis 12, dadurch gekennzeichnet, daß magnetische Materialien von der Beschickung durch magnetische Abtrennung vor dem Auslagen entfernt werden.

14. Verfahren nach Anspruch 13, dadurch gekennzeichnet, daß die Beschickung in Form einer Aufschlämmung mit einem Feststoffgehalt von 0,1 bis 25 Gew.% vorliegt.

15. Verfahren nach Anspurch 13 oder 14, dadurch gekennzeichnet, daß die magnetische Abtrennung unter im wesentlichen neutralen Bedingungen der Aufschlämmung bei oder nahe Umgebungstemperatur durchgeführt wird. wird.

16. Verfahren nach einem der Ansprüche 13 bis 15, dadurch gekennzeichnet, daß die Beschickungsaufschlämmung mit einem Schaumbildungsmittel gemischt und vor der magnetischen Abtrennung einer Flotationstrennung unterworfen wird.

17. Verfahren nach einem der Ansprüche 13 bis 16, dadurch gekennzeichnet, daß magnetische Materialien durch zwei Stufen von Magnetabtrennung entfernt werden.

18. Verfahren nach Anspruch 17, dadurch gekennzeichnet, daß die Abtrennung bewirkt wird, indem die Aufschlämmung durch Magnetfelder geführt wird, die jeweils eine Intensität von 2000 bzw. 8000 Gauss haben.

19. Verfahren nach einem der Ansprüche 1 bis 18, dadurch gekennzeichnet, daß die Stufe der Abtrennung der angereicherten Alkalihydroxydlösung vom Rückstand wenigstens eine magnetische Abtrennstufe hoher Intensität umfaßt.

20. Verfahren nach Anspruch 19, dadurch gekennzeichnet, daß die magnetische Abtrennstufe hoher Intensität in einem elektromagnetischen Separator durchgeführt wird.

21. Verfahren nach Anspruch 19 oder 20, dadurch gekennzeichnet, daß der Abtrennstufe hoher Intensität eine magnetische Abtrennstufe bei geringerer Intensität vorausgeht.

22. Verfahren nach Anspruch 21, dadurch gekennzeichnet, daß die vorhergehende Abtrennstufe in einem Rotationstrommelkonzentrator under Verwendung von Permanentmagneten durchgeführt wird.

23. Verfahren nach Anspruch 21, oder 22, dadurch gekennzeichnet, daß die geringere Intensität weniger als 12000 Gauss ist.

# Fig.1.

# Fig.2.

# Fig.3.

# Fig.4.

# Fig.5.

# Fig.6.

Fig.7.

Fig.8.

# FIG.9.

OPTIONAL FLOTATION SEPARATION STAGE

DUST
SLURRY
WATER

DELUMPER

OVERSIZE

LOW INTENSITY MAGNETIC SEPARATOR

MAGNETIC FRACTION

NON    MAGS

MEDIUM INTENSITY MAGNETIC SEPARATOR

MAGNETIC FRACTION

NON    MAGS

LEACH CIRCUIT

METAL PRODUCTS

LEACH RESIDUE

FILTRATION

PELLETISER

RECYCLE TO IRONMAKING

0 040 659

GRAPH VARIATIONS IN MAGNETIC SUSCEPTIBILITY WITH ORIGIN OF DUST

FIG.10.

EAT ELECTRIC STEELMAKING
(HIGH GRADE GRADE)

BF BLAST FURNACE

EA2 ELECTRIC
STEELMAKING
(LOW GRADE
SCRAP)

PROPORTION
IN
GRADE
%

BASIC
OXYGEN
STEELMAKING

DECREASING MAGNET SUSCEPTIBILITY OR
INCREASING FIELD STRENGTH

0 040 659

# FIG.11.

PROCESS FLOW DIAGRAM I